# EUROPEAN PATENT SPECIFICATION

(11) **EP 0 507 721 B1**
(45) Date of publication and mention of the grant of the patent: **21.12.1994**
(21) Application number: 92500032.5
(22) Date of filing: 01.04.1992
(51) Int. Cl.: A47L 13/512, F16B 2/22

(54) **Flexible clamp for support of handles and the like in vertical position**
Flexible Klammer zum Halten von Stielen oder dergleichen in einer senkrechten Position
Agrafe élastique pour supporter des manches ou similaires en position verticale

(30) Priority: 04.04.1991 ES 9100971
(43) Date of publication of application: 07.10.1992
(73) Proprietor: SAINT GENIS, S.A., E-08758 Cervello (Barcelona) (ES)
(72) Inventor: Sangenis Linan, Alberto, E-08960 Sant Just Desvern (Barcelona) (ES)
(74) Representative: Ponti Sales, Adelaida

(56) References cited:
- WO-A-85/00132
- BE-A- 888 618
- DE-U- 8 803 274
- DE-U- 8 912 783
- US-A- 1 968 462
- US-A- 4 094 483

## Description

The present invention refers to a flexible clamp for support of cylindrical handles in vertical position, such as the handles of brooms, sweeping implements, mops, tools and the like.

Known in the art are diverse variants of supports for handles of implements destined to cleaning and other uses, basically formed by a pressure clamp at the ends of which, open to penetration of the handle, are usually fitted corresponding turnable rollers, which partially obstruct the entry mouth of the clamp, but which nevertheless facilitate such penetration. To the front side of the back, the clamp can be provided with a projecting element of curved concave surface. The handle of the implement to be supported thus penetrates by pressure between the turnable rollers, which then compress it against the projecting element described, retaining the handle in suspended position by means of three isolated points of contact formed by the two rollers at the ends of the clamp and the projecting element at the back. (see e.g. DE-U-8.803.274)

These known clamps are relatively costly to manufacture and assemble, as they are composed of several pieces which must then be assembled.

The known clamps have the further disadvantage of not efficiently securing the handle housed within them, so that the latter can easily slip down from the clamp.

US-A-4,094,483 discloses a device for removably mounting articles which is provided with two spaced legs connected at one end thereof by means of a cross element.

WO-A-8 500 132 describes a clamp having the features of the preamble of claim 1.

The clamp object of the invention is designed to overcome the disadvantages presented by known clamps destined to hold handles of cleaning implements and the like in vertical position. The most notable features of the invention lies in its practically complete and continuous adaptation to the outer perimeter of the handle to be secured, while the configuration thereof is remarkably simpler.

The new clamp in question is of flexible material and is sustained at its ends by the leading points of two pressure arms or jaws which open on penetration of the handle and then provide pressure to retain same.

On the basis of this conventional support base, the clamp object of the invention differs from all known models in that it is made up of a continuous band of flexible material (rubber, plastic or any similar material), of substantially vertical inner wall, whose total length is somewhat less than the total perimeter of the handle to be held and which always adopts an arched position, in readiness to clamp and encircle any handle which is made to penetrate between the ends of same held by the support and pressure arms which form the entry passage for said handle. This entry passage may or may not be provided with freely turnable rollers or other elements which facilitate insertion, and with other accessory details.

In a preferred embodiment, the continuous elastic strip which is to clamp the handle to be retained is provided with broader end sections which form a single element with same.

For a better understanding of all that has been set forth, some drawings are attached, in which, by ways of example only, is shown the practical form of this preferred embodiment of the flexible clamp of the invention.

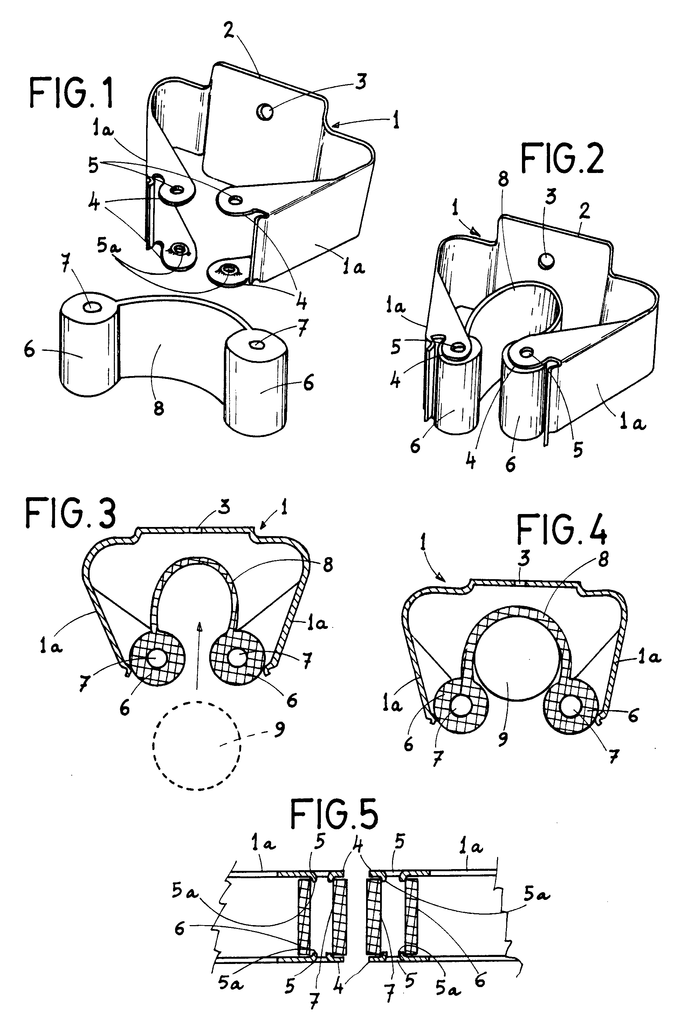

In said drawings, figure 1 is an exploded perspective view of the clamp; figure 2 is a view similar to that of figure 1, showing the assembled clamp; figure 3 is a cross-section of the clamp at rest position, with a handle spaced from it; figure 4 is a view similar to that of figure 3, but with the handle retained inside the clamp.

The clamp in question comprises a base piece of general reference -1-, provided with a central section -2-, with eventual orifices -3- for insertion of screws or other retaining elements for securing to any vertical surface. It may also be provided with fixing devices of another nature, such as adhesive-type systems or ones for fitting into a base which may or may not be provided with a protective housing, etc.

Independently of the material of which it is formed and of its shape, the section -1- has as a characteristic that its arms or supports -1a- have a tendency to close elastically, whether owing to the characteristics of the material of which the piece -1- is formed, or by incorporation of a spring or the like which pushes the arms -1a- towards each other, all this according to techniques known in the art.

The ends of these arms -1a- are provided with corresponding pairs of tabs -4- facing each other, provided with projecting or inset fits -5-. Between each one of these pairs of tabs -4-, the corresponding thicker sections -6- at the ends of the flexible clamp -8- are fitted by direct fitting. The thicker sections -6- are provided with axial fits -7- which are projecting or inset for fitting into the corresponding fits -5- of the tabs -4- between which they are retained, said thicker sections -6- being capable of axial turning (figure 1).

The fits -5- of the tabs -4- are provided with inward projecting flanges -5a-, in order to engage the fits -7- of the thicker sections -6-.

In the example, the thicker sections -6-situated at the ends of the flexible clamp -8- form a single piece with said clamp. This clamp in the form of a band of a certain thickness which may be made up of a single strip or several strips, or by a braid or fabric or any other material of suitable composition, is fitted between the arms -1a- of the piece -1- and adopts an arched shape towards the inside of the device (figures 2 and 3).

As emerges from all that has been set forth and from observation of the drawings, the gap between the thicker sections -6- once fitted between the tabs -4- of the arms -1a- is smaller than the diameter of the handle -9- of an implement to be retained therein, such as the handle of a broom or any other implement.

In order for a handle -9- to be retained, it has simply to be inserted by pressure inside the clamp, thus making the support arms -1a- open out to allow penetration. Once the handle -9- has been inserted, it is trapped as a result of the adjustment or encircling of most of its perimeter by the flexible band of the clamp -8-, with a contact which is continuous and extense if the relation between clamp and diameter of the handle or implement to be held is suitable, so that there exists no risk of the retained handle sliding down vertically, as often occurs with clamps which are provided only with isolated and non-perimetral points of retention.

Apart from this different and more effective retention system, in the example of embodiment used for this description the clamp in question is made up of only two pieces, since the flexible band -8- and its terminal thicker sections -6- form a single piece which can be obtained directly by moulding, this flexible clamp being incorporated directly onto the support section -1- by simple fitting between the pairs of tabs -4-, without any need for pins or transversal spindles, or rivets or other accessories of any type, or subsequent manipulation, so that the overall composition of the device is simplified to the utmost, and so are the assembly operations.

Independent of the object of the invention shall be the materials used in manufacturing of the components of the clamp, shapes and dimensions of same and all accessory details which might be presented, as long as they do not affect its essential nature.

The flexible band may also be hinged to the support arms without the provision of thicker sections or cylinders at its ends; the walls of the band may be smooth or rough, or provided with projections intended to improve the gripping action.

## Claims

1. Flexible clamp for supporting handles and the like in vertical position, comprising a continuous band (8), which is fitted in arched position, leaving a gap between its ends (6) to allow the insertion of a handle (9) to be retained, said continuous band (8) being linked at its ends (6) by means of vertical joints to corresponding supports (1a), said continuous band being made of flexible material, characterised in that said gap between the ends (6) of the band (8) being smaller than the diameter of the handle (9) to be retained, and in that said supports (1a) are resilient and allow the possibility of temporarily forcing said gap when the handle (9) to be retained is inserted within the arch formed by the band (8), closing again afterwards and causing the inner side of the continuous band (8) of flexible material to contact, over its entire useful surface, with an equivalent zone of the outer periphery of the handle (9), thus giving rise to close fit between flexible clamp and retained handle.

2. Flexible clamp as claimed in claim 1, characterized in that said flexible band (8) has thicker sections (6) at its terminal ends which are provided with appropriate retention fits (7) for engagement with complementary fits (4) of the two ends of the support arms (1a) to which said terminal thicker sections (6) of the band (8) are attached, the support arms (1a) being part of a single unitary piece (1) provided with the appropriate means (3) for fixing of the device to the corresponding vertical installation surface.

## Patentansprüche

1. Biegsame Klammer zum Haltern von Handgriffen und dergleichen in vertikaler Stellung, mit einem durchgehenden Band (8), das in gebogener Stellung unter Belassen eines Spalts zwischen seinen Enden (6) angebracht ist, um die Einführung eines zurückzuhaltenden Handgriffs (9) zu erlauben, wobei das durchgehende Band (8) an seinen Enden (6) mittels vertikaler Gelenke an entsprechenden Trägern (1a) angelenkt ist, wobei das durchgehende Band aus einem biegsamen Material hergestellt ist, dadurch gekennzeichnet, daß der Spalt zwischen den Enden (6) des Bands (8) kleiner ist als der Durchmesser des zurückzuhaltenden Handgriffs (9), und daß die Träger (1a) federnd sind und die Möglichkeit zulassen, den Spalt vorübergehend aufzuweiten, wenn der zurückzuhaltende Handgriff (9) in den durch das Band (8) gebildeten Bogen eingesetzt wird, danach erneut zu schließen und die Innenseite des durchgehenden Bands (8) aus biegsamem Material über seine gesamte Nutzoberfläche dazu veranlaßt, mit einer äquivalenten Zone des Außenrands des Handgriffs (9) in Kontakt zu kommen, und dadurch ein sattes Anliegen zwischen der biegsamen Klammer und dem zurückgehaltenen Handgriff zu veranlassen.

2. Biegsame Klammer nach Anspruch 1, dadurch gekennzeichnet, daß das biegsame Band (8) an seinen Abschlußenden dickere Bereiche (6) hat, die mit geeigneten Sicherungssitzen (7) zum Eingriff mit komplementären Sitzen (4) der beiden Enden der Tragarme (1a) vorgesehen sind, an denen die dickeren Abschlußbereiche (6) des Bands (8) angebracht sind, wobei die Tragarme (1a) Teil eines einzigen einheitlichen Stücks (1) sind, das mit einer geeigneten Einrichtung (3) zum Befestigen der Vorrichtung an der entsprechenden vertikalen Installationsoberfläche versehen ist.

## Revendications

1. Attache souple pour supporter des manches et analogues dans une position verticale, comportant une bande continue (8) qui est agencée dans une position cintrée, laissant un espace situé entre sas extrémités (6) destiné à l'insertion d'un manche (9) a retenir, ladite bande continue (8) étant reliée au niveau de ses extrémités (6) par l'intermédiaire de liaisons verticales à des supports (1a) correspondants, ladite bande continue étant constituée de matériau souple, caractérisée en ce que ledit espace existant entre les extrémités (6) de la bande (8) est plus petit que le diamètre du manche (9) à retenir, et en ce que lesdits supports (1a) sont élastiques et donnent la possibilité de forcer de manière temporaire ledit espace lorsque le manche (9) à retenir est inséré à l'intérieur du cintre formé par la bande (8), se refermant ensuite et amenant le côté intérieur de la bande (8) de matériau souple à venir en contact, sur sa surface utile complète, avec une zone équivalente de la périphérie extérieure du manche (9), créant ainsi un agencement serré entre l'attache souple et le manche retenu.

2. Attache souple selon la revendication 1, caractérisée en ce que ladite bande souple (8) a des tronçons plus épais (6) situés au niveau de ses extrémités terminales, qui sont munis d'agencements de retenue (7) appropriés destinés à venir en prise avec des agencements complémentaires (4) des deux extrémités des bras de support (1a) auxquels lesdits tronçons terminaux (6) plus épais de la bande (8) sont fixés, les bras de support (1a) étant une partie d'une pièce unitaire (1) unique munie de moyens appropries (3) pour la fixation du dispositif sur une surface d'installation verticale correspondante.
